# EUROPÄISCHE PATENTSCHRIFT

(11) **EP 2 501 006 B1**
(45) Veröffentlichungstag und Bekanntmachung des Hinweises auf die Patenterteilung: **09.12.2015**
(21) Anmeldenummer: 12151963.1
(22) Anmeldetag: 20.01.2012
(51) Int. Cl.: H02G 7/20

(54) **Freileitungseinrichtung, insbesondere für Hochspannungsfreileitungen**
Overhead line device, in particular for high voltage overhead lines
Installation de ligne aérienne, notamment pour lignes aériennes à haute tension

(30) Priorität: 18.03.2011 DE 102011001398
(43) Veröffentlichungstag der Anmeldung: 19.09.2012
(73) Patentinhaber: SAG GmbH, 63225 Langen (DE)
(72) Erfinder: Pohlmann, Heinrich, 64390 Erzhausen (DE); Schliephake, Ludwig, 86157 Augsburg (DE)
(74) Vertreter: Rohmann, Michael

(56) Entgegenhaltungen:
- GB-A- 344 132
- US-A- 1 741 963
- SFE: "Considerations sur les lignes à très haute tension de l'avenir", REVUE GENERALE DE L ELECTRICITE, Bd. 79, Nr. 3, 31. März 1970 (1970-03-31), Seiten 211-222, XP001700136, Paris

## Beschreibung

Die Erfindung betrifft eine Freileitungseinrichtung, insbesondere für Hochspannungsfreileitungen, - mit einer Mehrzahl von Masten und mit entlang der Freileitungseinrichtung verlaufenden Leiterseilen, wobei zumindest einige Masten jeweils mit zumindest einer Ankerseilanordnung stabilisiert sind, wobei eine Ankerseilanordnung mit ihrem oberen Ende an dem zugeordneten Mast angeschlossen ist und mit ihrem unteren Ende in einem Untergrund bzw. im Erdboden fixiert bzw. verankert ist und wobei zumindest ein quer, vorzugweise senkrecht zu den Ankerseilanordnungen verlaufendes Leiterseil von den Ankerseilanordnungen gehalten wird bzw. an den Ankerseilanordnungen fixiert ist. Bei den Leiterseilen handelt es sich insbesondere um Phasenseile eines Drehstromsystems. Vorzugsweise werden dabei zwei Stromkreise mit sechs Leiterseilen bzw. sechs Phasenseilen realisiert (so genannte 2-systemige Leitung). Mit dem Begriff Leiterseil ist im Rahmen der Erfindung auch ein Leiterseilbündel gemeint, das für eine Phase eines Drehstromsystems eingesetzt wird.

Eine Freileitungseinrichtung der eingangs beschriebenen Art ist aus US 1 741 963 A bekannt. Dabei handelt es sich jedoch um eine relativ komplexe und voluminöse Einrichtung, die nicht ins Landschaftsbild passt. Eine Freileitungseinrichtung der vorstehend beschriebenen Art ist im Übrigen auch aus GB 344 132 A bekannt.

Freileitungseinrichtungen sind aus der Praxis in unterschiedlichen Ausführungsformen bekannt. Bei diesen bekannten Freileitungseinrichtungen werden die Leiterseile über Isolatoren unmittelbar an den Masten aufgehängt. Zur Gewährleistung einer ausreichenden Stabilität und insbesondere einer ausreichenden Biegesteifigkeit der Maste, werden diese oftmals sehr breit und voluminös und unter Einbeziehung einer Mehrzahl von Mastkomponenten ausgebildet. Derart breite und voluminöse Masten verunstalten aber das Landschaftsbild. Im Übrigen lässt bei manchen bekannten Freileitungseinrichtungen die Funktionssicherheit der Fixierung bzw. der Aufhängung der Leiterseile zu wünschen übrig.

Demgegenüber liegt der Erfindung das technische Problem zugrunde, eine Freileitungseinrichtung der eingangs genannten Art anzugeben, bei der die vorstehend beschriebenen Nachteile effektiv vermieden werden können.

Zur Lösung dieses technischen Problems lehrt die Erfindung eine Freileitungseinrichtung der eingangs genannten Art, welche dadurch gekennzeichnet ist, dass eine Ankerseilanordnung zumindest zwei nebeneinander angeordnete, vorzugsweise zueinander parallele Ankerseile aufweist.

Die im Rahmen der Erfindung eingesetzten Maste werden auch als Freileitungsmaste bezeichnet. Grundsätzlich können für die erfindungsgemäße Freileitungseinrichtung unterschiedliche Ausführungsformen von Masten verwendet werden. Gemäß einer bevorzugten Ausführungsform sind die Masten als Gittermasten bzw. Stahlgittermasten ausgeführt. Nach einer anderen Ausführungsform können auch Stahlrohrmasten oder Betonmasten eingesetzt werden. Prinzipiell ist es auch denkbar, Holzmasten zu verwenden.

Nach besonders bevorzugter Ausführungsform der Erfindung sind alle Masten bzw. quasi alle Masten einer Freileitungseinrichtung mit zumindest einer Ankerseilanordnung stabilisiert. Erfindungsgemäß weist eine erfindungsgemäße Ankerseilanordnung mehr als ein Ankerseil auf. Eine empfohlene Ausführungsform der Erfindung ist dadurch gekennzeichnet, dass eine Ankerseilanordnung zwei nebeneinander angeordnete, vorzugsweise zueinander parallele Ankerseile aufweist. Diese beiden Ankerseile sind zweckmäßigerweise zumindest bereichsweise mit Traversenelementen miteinander verbunden. Beide Ankerseile sind dann bevorzugt mit ihrem oberen Ende an dem zugeordneten Mast angeschlossen und mit ihrem unteren Ende in einem Untergrund bzw. im Erdboden fixiert bzw. verankert.

Es liegt im Rahmen der Erfindung, dass ein Mast mit zwei Ankerseilanordnungen stabilisiert ist, die an gegenüberliegenden Seiten des Mastes angeordnet sind. Vorzugsweise haben diese beiden Ankerseilanordnungen die gleiche Länge bzw. im Wesentlichen die gleiche Länge. Es empfiehlt sich, dass diese beiden Ankerseilanordnungen in der gleichen Höhe bzw. im Wesentlichen in der gleichen Höhe am Mast angeschlossen sind. Nach einer bewährten Ausführungsform sind die beiden Ankerseilanordnungen identisch bzw. quasi identisch ausgebildet.

Es liegt im Rahmen der Erfindung, dass die erfindungsgemäßen Ankerseilanordnungen quer, bevorzugt senkrecht zur Längsrichtung der Freileitungseinrichtung angeordnet sind. Es liegt weiterhin im Rahmen der Erfindung, dass eine Ankerseilanordnung schräg zu dem zugeordneten Mast orientiert ist und insbesondere einen Winkel α von 25° bis 45°, bevorzugt von 30° bis 40° mit dem Mast einschließt. Zweckmäßigerweise beträgt der Winkel β zwischen einer Ankerseilanordnung und dem Untergrund bzw. dem Erdboden 45 bis 65°, bevorzugt 50° bis 60°. Es liegt im Rahmen der Erfindung, dass eine Ankerseilanordnung bzw. ein Ankerseil einer Ankerseilanordnung mit dem oberen Ende in dem in Bezug auf seine Höhe h oberen Drittel des Mastes angeschlossen ist, bevorzugt im oberen Viertel des Mastes angeschlossen ist. Nach einer sehr bevorzugten Ausführungsform ist eine Ankerseilanordnung bzw. ist ein Ankerseil einer Ankerseilanordnung mit dem oberen Ende an der Spitze des Mastes angeschlossen.

Nach sehr empfohlener Ausführungsform der Erfindung werden zumindest zwei Leiterseile, vorzugsweise zumindest drei Leiterseile von einer Ankerseilanordnung gehalten bzw. sind zumindest zwei Leiterseile, vorzugsweise zumindest drei Leiterseile an der Ankerseilanordnung fixiert. Eine bewährte Ausführungsform ist dadurch gekennzeichnet, dass die erfindungsgemäße Freileitungseinrichtung als Drehstromsystem ausgebildet ist und somit drei Leiterseile bzw. Phasenseile oder 3 • x (x = ganze Zahl) Leiterseile bzw. Phasenseile aufweist. Nach einer empfohlenen Ausführungsform ist an gegenüberliegenden Seiten eines Mastes jeweils eine Ankerseilanordnung vorgesehen und zweckmäßigerweise sind an jeder der gegenüberliegenden Ankerseilanordnungen drei Leiterseile bzw. drei Phasenseile fixiert.

Es liegt im Rahmen der Erfindung, dass zumindest ein Längenabschnitt einer Ankerseilanordnung bzw. eines Ankerseils einer Ankerseilanordnung von zumindest einem Isolator gebildet wird. Zweckmäßigerweise ist ein von einer Ankerseilanordnung gehaltenes bzw. ein an der Ankerseilanordnung fixiertes Leiterseil zu beiden Seiten bzw. nach oben und nach unten hin durch jeweils zumindest einen Isolator von den übrigen Abschnitten der Ankerseilanordnung getrennt. Wenn eine Ankerseilanordnung nach bevorzugter Ausführungsform aus zwei Ankerseilen besteht, trifft das vorgenannte Merkmal zweckmäßigerweise für beide Ankerseile zu.

Gemäß einer empfohlenen Ausführungsform der Erfindung ist zumindest ein Leiterseil an einer Ankerseilanordnung aufgehängt, und zwar vorzugsweise mittels zumindest einer Klemmeinrichtung aufgehängt. Es liegt im Rahmen der Erfindung, dass an einer Ankerseilanordnung ein Befestigungsring angeschlossen ist und dass in diesem Befestigungsring zumindest ein Leiterseil mittels zumindest einer Klemmeinrichtung aufgehängt ist.

Eine ganz bevorzugte Ausführungsform der Ausführungsform ist dadurch gekennzeichnet, dass zumindest ein zwischen den Masten verlaufendes Stabilisierungsseil vorgesehen ist und dass dieses Stabilisierungsseil zwischen den Masten, die Auslenkung der Masten in Leitungsrichtung reduzierend, gespannt ist bzw. aufgespannt ist. In Leitungsrichtung meint hier insbesondere in Richtung des Stabilisierungsseiles bzw. in Längsrichtung der Freileitungseinrichtung. Vorzugsweise wird das Stabilisierungsseil möglichst stramm und flach sowie mit möglichst geringem Durchhang gespannt. Durch diese Spannung des Stabilisierungsseils zwischen den Masten erfolgt eine effektive Stabilisierung der Masten in Bezug auf Auslenkungen in Leitungsrichtung. Die Masten funktionieren deshalb im Gegensatz zu vielen aus dem Stand der Technik bekannten Masten zumindest im Wesentlichen lediglich als Druckstützen. Das hat den Vorteil, dass die im Rahmen der erfindungsgemäßen Freileitungseinrichtung eingesetzten Masten relativ schmal und filigran ausgebildet sein können.

Eine bevorzugte Ausführungsform der Erfindung ist dadurch gekennzeichnet, dass bei einem Mastabstand von 200 bis 600 m, insbesondere bei einem Mastabstand von 250 bis 450 m der Durchhang des Stabilisierungsseils bei einer Temperatur von 10 °C 1 bis 4 m, bevorzugt 1,5 bis 3,5 m und sehr bevorzugt 2 bis 3 m beträgt. Mastabstand meint dabei den Abstand von zwei in Längsrichtung der erfindungsgemäßen Freileitungseinrichtung hintereinander angeordneten Masten. Vorzugsweise beträgt der Durchmesser des Stabilisierungsseil 2,5 bis 10 cm, bevorzugt 3 bis 8 cm und sehr bevorzugt 4 bis 7 cm. Gemäß einer bevorzugten Ausführungsform besteht das Stabilisierungsseil aus Stahl bzw. aus Stahldrähten. Eine andere Ausführungsform sieht vor, dass das Stabilisierungsseil aus Stalum-Drähten besteht. Dabei handelt es sich um mit Aluminium beschichtete Stahldrähte.

Nach einer sehr empfohlenen Ausführungsform der Erfindung ist das Stabilisierungsseil das Erdseil der Freileitungseinrichtung. Bei dem Stabilisierungsseil handelt es sich dann also um ein geerdetes elektrisch leitfähiges Seil. Zweckmäßigerweise ist das Stabilisierungsseil in Bezug auf die Höhe h eines Mastes im oberen Drittel, vorzugsweise im oberen Viertel des Mastes an dem Mast fixiert. Nach einer bevorzugten Ausführungsvariante ist das Stabilisierungsseil an der Spitze eines Mastes bzw. an den Spitzen der Masten fixiert.

Der Erfindung liegt zunächst die Erkenntnis zugrunde, dass aufgrund der erfindungsgemäßen Fixierung der Leiterseile an den Ankerseilanordnungen das Volumen und die Breite der Masten im Vergleich zu anderen aus dem Stand der Technik bekannten Freileitungseinrichtungen deutlich reduziert werden kann. Dazu trägt auch insbesondere die bevorzugte Ausführungsform mit dem zwischen den Masten gespannten Stabilisierungsseil bei. Die Masten funktionieren im Rahmen der Erfindung gleichsam im Wesentlichen lediglich als Druckstützen. Die Masten können somit viel schmaler und filigraner ausgeführt werden als die Masten vieler bekannter Freileitungseinrichtungen. Im Übrigen können die Leiterseile auf einfache Weise langfristig funktionssicher an den Ankerseilanordnungen fixiert werden. Im Ergebnis dürfte die Akzeptanz bezüglich einer erfindungsgemäßen Freileitungseinrichtung deutlich größer sein als bei bislang bekannten Freileitungseinrichtungen und somit dürfte die Genehmigung für eine erfindungsgemäße Freileitungseinrichtung verhältnismäßig einfach zu erhalten sein. Es ist auch zu betonen, dass die erfindungsgemäße Freileitungseinrichtung auf relativ einfache und wenig aufwendige Weise realisiert werden kann.

Nachfolgend wird die Erfindung anhand einer lediglich ein Ausführungsbeispiel darstellenden Zeichnung näher erläutert. Es zeigen in schematischer Darstellung:

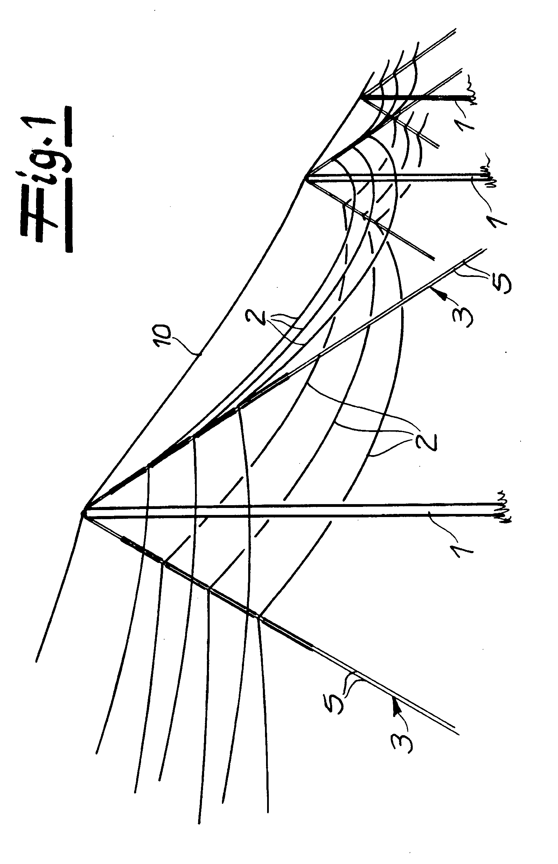

- Fig. 1: eine perspektivische Ansicht einer erfindungsgemäßen Freileitungseinrichtung,

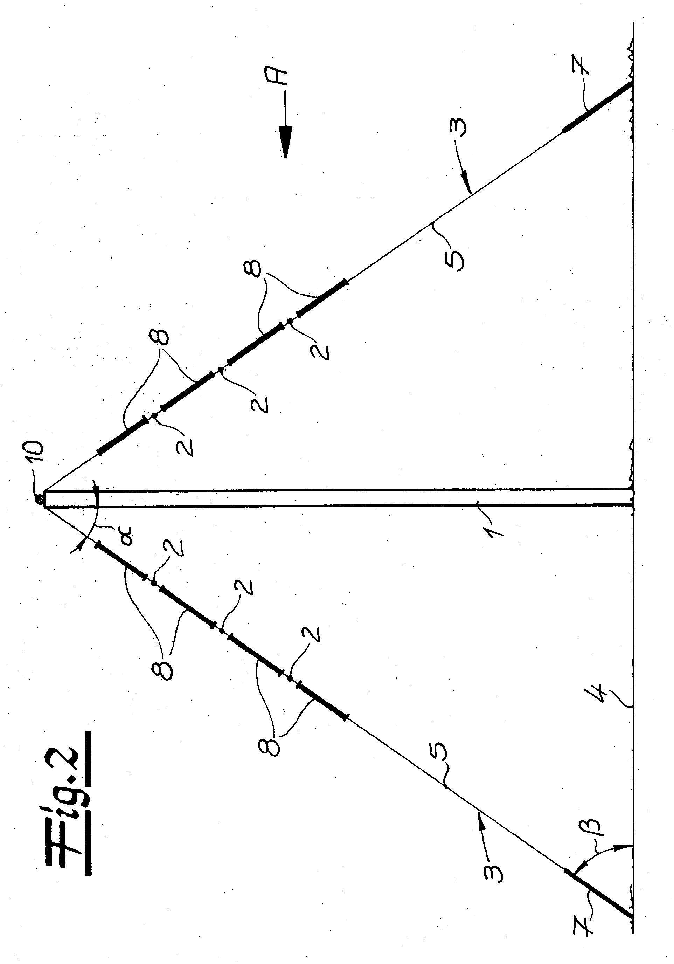

- Fig. 2: einen Schnitt durch den Gegenstand gemäß Fig. 1 und
- Fig. 3: den Gegenstand nach Fig. 2 aus Richtung des Pfeiles A.

Die Figuren zeigen eine erfindungsgemäße Freileitungseinrichtung für Hochspannungsfreileitungen mit einer Mehrzahl von Masten 1 und mit entlang der Freileitungseinrichtung verlaufenden Leiterseilen 2. Jeder Mast 1 ist mit zwei an gegenüberliegenden Seiten des Mastes 1 angeschlossenen Ankerseilanordnungen 3 stabilisiert. Die Ankerseilanordnungen 3 sind dabei quer bzw. senkrecht zur Längsrichtung der Freileitungseinrichtung angeordnet. Jede Ankerseilanordnung 3 ist im Ausführungsbeispiel nach den Figuren mit ihrem oberen Ende an der Spitze des zugeordneten Mastes 1 angeschlossen und mit ihrem unteren Ende im Erdboden 4 fixiert bzw. verankert. Erfindungsgemäß sind die quer bzw. senkrecht zu den Ankerseilanordnungen 3 verlaufenden Leiterseile an den Ankerseilanordnungen 3 fixiert.

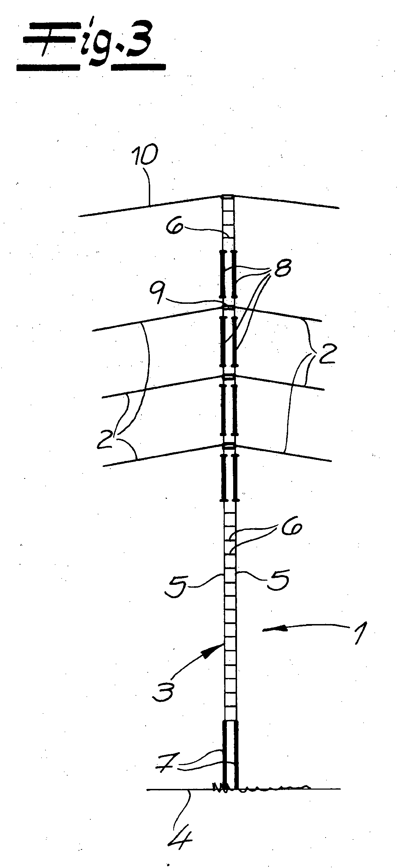

Vorzugsweise und im Ausführungsbeispiel weist eine Ankerseilanordnung 3 zwei nebeneinander angeordnete und zueinander parallele Ankerseile 5 auf (Fig. 3). Zweckmäßigerweise und im Ausführungsbeispiel sind die beiden Ankerseile 5 einer Ankerseilanordnung 3 in ihrem oberen Bereich und in ihrem unterem Bereich durch Traversenelemente 6 miteinander verbunden. Bevorzugt und im Ausführungsbeispiel weist im Übrigen jedes Ankerseil 5 im Bereich des Erdbodens 4 eine Verdickung 7 aus Stahl auf, um ein Kappen der Ankerseile 5 zu verhindern bzw. zu erschweren. Es liegt im Rahmen der Erfindung, dass die Ankerseilanordnungen 3 bzw. die Ankerseile 5 schräg zu dem zugeordneten Mast 1 orientiert sind und im Ausführungsbeispiel bilden die Ankerseilanordnungen 3 mit dem zugeordneten Mast 1 einen Winkel α von etwa 35°. Fernerhin schließen im Ausführungsbeispiel die Ankerseilanordnungen 3 mit dem Erdboden 4 einen Winkel β von etwa 55° ein.

Vorzugsweise und im Ausführungsbeispiel ist die erfindungsgemäße Freileitungseinrichtung als Drehstromsystem mit zwei Stromkreisen ausgebildet. Jeder Stromkreis umfasst drei Leiterseile 2 bzw. Phasenseile. Dabei werden vorzugsweise und im Ausführungsbeispiel die drei Leiterseile 2 eines Stromkreises an den auf der linken Seite der Masten 1 angeordneten Ankerseilanordnungen 3 fixiert und die drei Leiterseile 2 des zweiten Stromkreises an den auf der rechten Seite der Masten 1 angeordneten Ankerseilanordnungen 3 fixiert.

Jedes von einer Ankerseilanordnung 3 aufgenommene Leiterseil 2 ist von den weiteren an dieser Ankerseilanordnung fixierten Leiterseilen 2 über Isolatoren 8 getrennt. Vorzugsweise und im Ausführungsbeispiel ist ein an einer Ankerseilanordnung 3 fixiertes Leiterseil 2 zu beiden Seiten hin bzw. nach oben und unten hin durch Isolatoren von den übrigen Abschnitten der Ankerseilanordnung 3 getrennt. Insbesondere in der Fig. 3 ist erkennbar, dass Längenabschnitte der beiden Ankerseile 5 von diesen Isolatoren 8 gebildet werden.

Die Leiterseile 2 werden im Übrigen durch nicht näher dargestellte Befestigungsringe 9 der Ankerseilanordnungen 3 geführt, wobei diese Befestigungsringe 9 an den Ankerseilanordnungen 3 fixiert sind. Die Leiterseile sind bevorzugt und im Ausführungsbeispiel in den Befestigungsringen 9 mittels nicht näher dargestellter Klemmeinrichtungen aufgehängt.

Nach besonders bevorzugter Ausführungsform und im Ausführungsbeispiel ist ein zwischen den Masten 1 verlaufendes Stabilisierungsseil 10 vorgesehen, das zwischen den Masten 1 - die Auslenkung der Masten 1 in Leitungsrichtung reduzierend - gespannt ist. Das Stabilisierungsseil 10 wird mit möglichst geringem Durchhang gespannt. Aufgrund dieser Spannung des Stabilisierungsseiles 10 werden die Masten 1 in Bezug auf die Leitungsrichtung optimal stabilisiert. Dadurch wird es möglich, dass die Masten 1 im Vergleich zu vielen aus dem Stand der Technik bekannten Masten schmaler und filigraner ausgeführt werden können. Die Masten 1 wirken hier im Wesentlichen nur noch als Druckstützen. Bevorzugt und im Ausführungsbeispiel ist das Stabilisierungsseil 10 im Übrigen an den Spitzen der Masten angeschlossen. Zweckmäßigerweise und im Ausführungsbeispiel ist das Stabilisierungsseil 10 das Erdseil der Freileitungseinrichtung. Der Durchhang des Stabilisierungsseils 10 ist im Übrigen geringer bzw. deutlich geringer als der Durchhang der Leiterseile 2. Durchhang meint den maximalen Abstand eines Leiterseils 2 bzw. des Stabilisierungsseils 10 von einer durch zwei benachbarte Aufhängungspunkte des Leiterseils 2 bzw. des Stabilisierungsseils 10 gelegte gedachte Linie bzw. Geraden.

## Patentansprüche

1. Freileitungseinrichtung, insbesondere für Hochspannungsfreileitungen, - mit einer Mehrzahl von Masten (1) und mit entlang der Freileitungseinrichtung verlaufenden Leiterseilen (2), wobei zumindest einige Masten (1) jeweils mit zumindest einer Ankerseilanordnung (3) stabilisiert sind, wobei eine Ankerseilanordnung (3) mit ihrem oberen Ende an dem zugeordneten Mast (1) angeschlossen ist und mit ihrem unteren Ende in einem Untergrund bzw. im Erdboden (4) fixiert bzw. verankert ist, wobei zumindest ein quer, vorzugsweise senkrecht zu den Ankerseilanordnungen (3) verlaufendes Leiterseil (2) von den Ankerseilanordnungen (3) gehalten wird bzw. an den Ankerseilanordnungen (3) fixiert ist, **dadurch gekennzeichnet, dass** eine Ankerseilanordnung (3) zumindest zwei nebeneinander angeordnete, vorzugsweise zueinander parallele Ankerseile (5) aufweist.

2. Freileitungseinrichtung nach Anspruch 1, **dadurch gekennzeichnet, dass** ein Mast (1) mit zwei Ankerseilanordnungen (3) stabilisiert ist, die an gegenüberliegenden Seiten des Mastes (1) angeordnet sind.

3. Freileitungseinrichtung nach einem der Ansprüche 1 oder 2, **dadurch gekennzeichnet, dass** eine Ankerseilanordnung (3) schräg zu dem zugeordneten Mast (1) orientiert ist und insbesondere einen Winkel α von 25° bis 45°, vorzugsweise von 30° bis 40° mit dem Mast (1) einschließt.

4. Freileitungseinrichtung nach einem der Ansprüche 1 bis 3, **dadurch gekennzeichnet, dass** zumindest zwei Leiterseile (2), vorzugsweise zumindest drei Leiterseile (2) von einer Ankerseilanordnung (3) gehalten werden bzw. an einer Ankerseilanordnung (3) fixiert sind.

5. Freileitungseinrichtung nach einem der Ansprüche 1 bis 4, **dadurch gekennzeichnet, dass** zumindest ein Längenabschnitt einer Ankerseilanordnung (3) bzw. eines Ankerseils (5) einer Ankerseilanordnung (3) von zumindest einem Isolator (8) gebildet wird.

6. Freileitungseinrichtung nach einem der Ansprüche 1 bis 5, **dadurch gekennzeichnet, dass** ein von der Ankerseilanordnung (3) gehaltenes bzw. an der Ankerseilanordnung (3) fixiertes Leiterseil (2) zu beiden Seiten hin durch jeweils zumindest einen Isolator (8) von den übrigen Abschnitten der Ankerseilanordnung (3) getrennt ist.

7. Freileitungseinrichtung nach einem der Ansprüche 1 bis 6, **dadurch gekennzeichnet, dass** zumindest ein Leiterseil (2) an einer Ankerseilanordnung (3) aufgehängt ist, und zwar vorzugsweise mittels zumindest einer Klemmeinrichtung aufgehängt ist.

8. Freileitungseinrichtung nach einem der Ansprüche 1 bis 7, **dadurch gekennzeichnet, dass** zumindest ein zwischen den Masten (1) verlaufendes Stabilisierungsseil (10) vorgesehen ist, und dass das Stabilisierungsseil (10) zwischen den Masten (1), die Auslenkung der Masten (1) in Leitungsrichtung reduzierend, gespannt ist.

## Claims

1. Overhead transmission line equipment, in particular for high-voltage overhead transmission lines, with a plurality of masts (1), and with conductor cables (2) running along the overhead transmission line equipment, wherein at least some masts (1) are stabilised with at least one anchor cable arrangement (3) in each case, wherein an anchor cable arrangement (3) with its upper end is connected to the associated mast (1) and with its lower end is fixed, that is to say, anchored, underground, that is to say, in the earth (4), wherein at least one conductor cable (2), running transversely, preferably at right angles, to the anchor cable arrangements (3), is held by the anchor cable arrangements (3), or is fixed to the anchor cable arrangements (3), **characterised in that**, an anchor cable arrangement (3) has at least two anchor cables (5) arranged next to one another, preferably parallel to one another.

2. The overhead transmission line equipment according to claim 1, **characterised in that** a mast (1) is stabilised with two anchor cable arrangements (3), which are arranged on opposite sides of the mast (1).

3. The overhead transmission line equipment according to any one of the claims 1 or 2, **characterised in that** an anchor cable arrangement (3) is oriented obliquely to the associated mast (1), and in particular subtends an angle α of 25° to 45°, preferably of 30° to 40°, with the mast (1).

4. The overhead transmission line equipment according to any one of the claims 1 to 3, **characterised in that** at least two conductor cables (2), preferably at least three conductor cables (2), are held by an anchor cable arrangement (3), or are fixed to an anchor cable arrangement (3).

5. The overhead transmission line equipment according to any one of the claims 1 to 4, **characterised in that** at least one longitudinal section of an anchor cable arrangement (3), that is to say, of an anchor cable (5) of an anchor cable arrangement (3), is formed by at least one insulator (8).

6. The overhead transmission line equipment according to any one of the claims 1 to 5, **characterised in that** a conductor cable (2), held by the anchor cable arrangement (3), or fixed to the anchor cable arrangement (3), is separated on both sides, in each case by at least one insulator (8), from the other sections of the anchor cable arrangement (3).

7. The overhead transmission line equipment according to any one of the claims 1 to 6, **characterised in that** at least one conductor cable (2) is suspended from an anchor cable arrangement (3), and in particular is preferably suspended by means of at least one clamping device.

8. The overhead transmission line equipment according to any one of the claims 1 to 7, **characterised in that** at least one stabilisation cable (10) is provided, running between the masts (1), and **in that** the stabilisation cable (10) is tensioned between the masts (1), reducing the deflection of the masts (1) in the direction of the transmission lines.

## Revendications

1. Installation de lignes aériennes, notamment pour des lignes aériennes haute tension, avec une pluralité de mâts (1) et avec des câbles conducteurs (2) s'étendant le long de l'installation de lignes aériennes, au moins certains mâts (1) étant stabilisés chacun par au moins un dispositif de câbles d'ancrage (3), un dispositif de câbles d'ancrage (3) étant raccordé par son extrémité supérieure au mât (1) associé et fixé ou ancré par son extrémité inférieure dans une embase ou dans la terre (4), au moins un câble conducteur (2) qui s'étend à la transversale, de préférence à la perpendiculaire des dispositifs de câbles d'ancrage (3) étant maintenu par les dispositifs de câbles d'ancrage (3) ou fixé sur les dispositifs de câbles d'ancrage (3), **caractérisée en ce qu'**un dispositif de câbles d'ancrage (3) comporte au moins deux câbles d'ancrage (5) placés côte à côte, de préférence parallèles l'un à l'autre.

2. Installation de lignes aériennes selon la revendication 1, **caractérisée en ce qu'**un mât (1) est stabilisé avec deux dispositifs de câbles d'ancrage (3) qui sont placés sur des côtés opposés du mât (1).

3. Installation de lignes aériennes selon l'une quelconque des revendications 1 ou 2, **caractérisée en ce qu'**un dispositif de câbles d'ancrage (3) est orienté en inclinaison par rapport au mât (1) associé et forme notamment un angle α de 25° à 45°, de préférence de 30° à 40° avec le mât (1).

4. Installation de lignes aériennes selon l'une quelconque des revendications 1 à 3, **caractérisée en ce qu'**au moins deux câbles conducteurs (2), de préférence au moins trois câbles conducteurs (2) sont maintenus par un dispositif de câbles d'ancrage (3) ou sont fixés sur un dispositif de câbles d'ancrage (3).

5. Installation de lignes aériennes selon l'une quelconque des revendications 1 à 4, **caractérisée en ce qu'**au moins un tronçon en longueur d'un dispositif de câbles d'ancrage (3) ou d'un câble d'ancrage (5) d'un dispositif de câbles d'ancrage (3) est formé par au moins un isolateur (8).

6. Installation de lignes aériennes selon l'une quelconque des revendications 1 à 5, **caractérisée en ce qu'**un câble conducteur (2) maintenu par un dispositif de câbles d'ancrage (3) ou fixé sur le dispositif de câbles d'ancrage (3) est séparé en direction des deux côtés des tronçons restants du dispositif de câbles d'ancrage (3) par chaque fois au moins un isolateur (8).

7. Installation de lignes aériennes selon l'une quelconque des revendications 1 à 6, **caractérisée en ce qu'**au moins un câble conducteur (2) est accroché sur un dispositif de câbles d'ancrage (3), à savoir de préférence au moyen d'au moins un système de serrage.

8. Installation de lignes aériennes selon l'une quelconque des revendications 1 à 7, **caractérisée en ce qu'**il est prévu au moins un câble stabilisateur (10) s'étendant entre deux mâts (1) et **en ce que** le câble stabilisateur (10) est tendu entre les mâts (1), en réduisant la déviation des mâts (1) dans la direction de lignes.
